# EUROPEAN PATENT SPECIFICATION

(11) **EP 0 432 338 B1**
(45) Date of publication and mention of the grant of the patent: **20.04.1994**
(21) Application number: 89830536.2
(22) Date of filing: 04.12.1989
(51) Int. Cl.: B65G 47/61

(54) **An automatic device for lifting, rotating and unloading clothes hangers, capable of operating between two overhead clothing conveyor systems installed side by side**
Automatische Vorrichtung zum Heben, Drehen und Abgeben von Kleiderbügeln, die zwischen zwei nebeneinander angeordneten Kleiderhängefördersystemen arbeitet
Dispositif automatique pour soulever, faire tourner et décharger des cintres, qui opère entre deux systèmes convoyeurs aériens pour vêtements installés côte à côte

(43) Date of publication of application: 19.06.1991
(73) Proprietor: METALPROGETTI di Santicchi Augusto & C. - S.n.c., I-06100 Perugia (IT)
(72) Inventor: Santicchi, Augusto, I-06100 Perugia,Fraz. San Sisto (IT)
(74) Representative: Baldi, Claudio

(56) References cited:
- EP-A- 0 337 906
- WO-A-88/03507
- AT-B- 386 397
- CH-A- 642 324
- DE-A- 2 924 110
- DE-U- 8 702 922
- GB-A- 854 436
- GB-A- 1 170 054
- GB-A- 2 137 949
- US-A- 4 062 440

## Description

This industrial patent application concerns an automatic device capable of lifting clothing hangers from an overhead clothing conveyor, rotating them 180° and arranging them in an orderly way on another overhead clothing conveyor, installed side by side.

The invention was developed in order to automatize and therefore make the operation for transferring clothing on their hangers from one overhead conveyor to another, quicker and cheaper.

This often has to be done inside clothing manufacturing factories, warehouses or cloakrooms and, to date it is carried out almost always manually, above all when clothing items have to be selected and transferred from one conveyor system to a specific position on the second conveyor system.

Some mechanical devices which can perform similar operations do exist as illustrated in the two following patents: US-A-4046440 and DE-A-2924110. Patent US-A-4046440 illustrates a device which lifts clothing items hooked on an overhead conveyor system and unloads them on to a similar conveyor system installed alongside the same.

This device - installed between the two conveyor systems - consists essentially of a horizontal arm rotating around a vertical axis and terminating with a pickup device which grasps the hook on which the clothing item hangs; once the clothing item has been hooked, the arm lifts automatically, rotates 180° and then moves downwards to place the clothing item on the second conveyor system.

Patent DE-A-8803507 illustrates a device consisting of a slanted arm terminating with a grasping hook which simultaneously lifts a number of clothes hangers suspended from a support trolley of a first overhead conveyor.

This arm can perform several runs forwards and backwards as well as oscillating upwards and downwards in order to unhook the clothing items from the first overhead conveyor to unloaded them to the second conveyor positioned under and alongside the lifting conveyor.

In this case of this device the clothing items are transferred without any rotation of the arm.

The device of the invention in question, as defined in claim 1 can also transfer clothing items from one overhead conveyor to another but has the advantage of being more simple and economical to construct as well as being more practical than the previous systems.

With respect to the patent described in the US patent, the device in question has a much more simple and compact structure as a whole thanks to the construction and operating solutions used.

More specifically, the device in question has a different mechanism for rotating the clothing hook 180° as well as different method for grasping the clothing hook to be lifted with respect to the US device.

As far as the German patent is concerned, the device in question has a different operating principle since it is positioned at the centre of the two adjacent conveyor systems and not in a more external position with respect to the two conveyor systems as in the case of the German patent; it can consequently rotate the clothing items 180° whereas this is not possible in the case of the German patent.

There are also enormous construction differences; in particular the structure of the device in question is again far less complicated and mor compact than that of the device described in the German patent.

In fact the device in question consists of a support trolley for a clip for grasping the hook of the hanger and transferring it from the first to the second conveyor system, being this trolley fitted with a group of idle wheels sliding in a guide made with a "C" shaped section fixed at the sides to a support bar placed transversely between the two above conveyor systems.

The alternating runs of this trolley are operated by the piston of a hydraulic or pneumatic cylinder fitted on the above support bar, which can oscillate on a vertical plane in that it is hinged at one end, by means of a horizontal pin, to a second tubular bar fitted parallelly next to the same, which supports the first bar fixed to the base of the rod of a hydraulic or pneumatic piston having a vertical axis, fitted on the support bar.

This trolley supports a vertical axis rotating pin, at the two ends of which two horizontal shelves are fitted, one at the bottom, for supporting the above clip, and the other at the top, which acts as a crank for rotating the pin around its vertical axis, thanks to a pin projecting from the end of this crank, and sliding within and under an upside down "U" shaped guide rail, fixed by means of support clamps to the above oscillating bar.

In order to rotate the hanger lifted, 180°, there is a loop along the upside down "U" shaped guide rail so that when the above pin passes through this loop, the crank turns 180° together with the pin, consequently also rotating the bottom shelf which supports the clip connected to the clothes hanger.

For major clarity the description of the invention continues with reference to the enclosed tables which are intended only for illustrative purposes and not in a limiting sense, where:

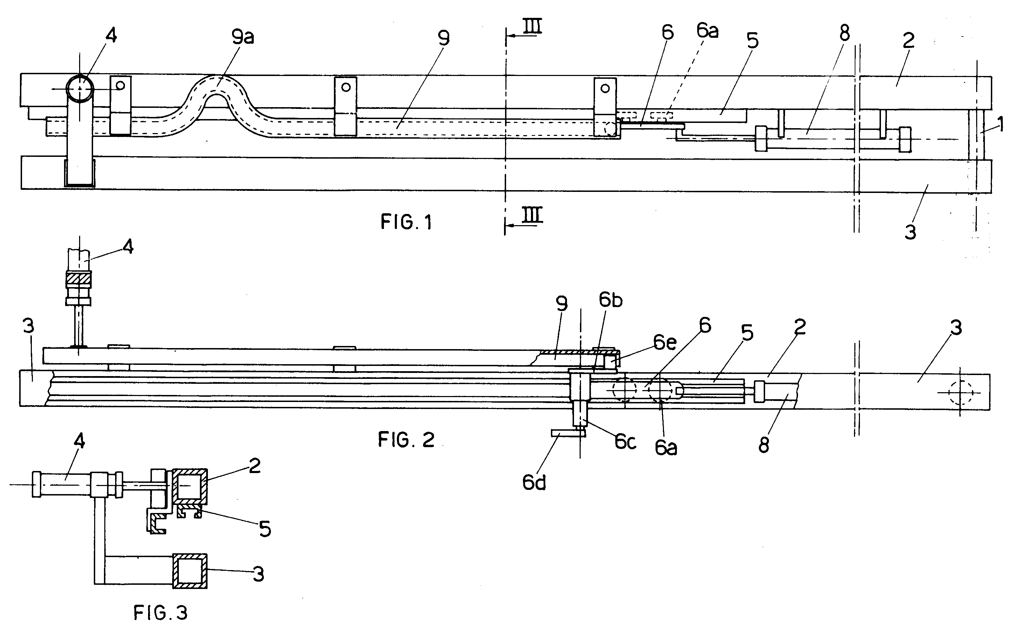

- figure 1 is a front plane view of the automatic device according to the invention;
- figure 2 is a schematic view of figure 1 with partial removal of the fixed support bar, in order to illustrate the construction components behind the same;
- figure 3 is the cross-section of figure 1 with the plane III-III;
- figure 4 is an axonometric illustration of the clip supplied with the device according to the invention, in a standardized version;
- figure 5 is an axonometric illustration of the clip supplied with this invention, in the version fitted with specific features, seen from the bottom in open position;
- figure 6 is a side view of the clip in figure 5 during the hooking phase.

With reference to the above tables, the device includes two tubular horizontal bars, fitted parallelly side by side, and hinged at one end by means of a horizontal pin (1), so that the bar (2) can oscillate on a vertical plane with respect to the fixed bar (3) acting as supporting frame for the entire device; a piston (4) is fitted on the fixed bar (3), suitable for supporting and operating the oscillating bar (2), when necessary.

On this oscillating bar (2), on the side wall turned towards the fixed supporting bar (3), there is a "C" shaped guide (5) in which a number of idle wheels (6a) of a trolley (6) which supports the clip (7) can slide horizontally, fitted to the same at the bottom for hooking hangers.

This trolley (6) is driven in alternating runs along the guide (5) by means of a hydraulic cylinder (8) fitted on the oscillating bar (2).

Above this oscillating bar (2), a rail (9) having a transverse upside down "U"shaped cross-section is fitted by means of supporting clamps, in which a first pin (6e) having a vertical axis engages and slides, projecting from a crank (6b) fixed at the top of a second pin (6c) having a vertical axis, supported by the trolley (6); this second pin (6c) projects at the bottom of the trolley (6) to support a horizontal shelf (6d) to which the above clip (7) is screwed.

The above rail (9) has a loop (9a) half-way along its length, shaped so as to force the crank (6b), thanks to its coupling with the pin (6a), to rotate 180°, thereby making the underlying pin (6c) of the horizontal shelf rotate integrally with the crank.

This clip (7) could consist of two sections, one of which is fixed (7a) and the other openable (7b), the same being constantly pressed against each other by a pre-stretched spring fitted to the same; in particular the openable section (7b) is screwed above a shelf (7f) pivoted on the fixed section (7a) This in fact involves a standard type of clip, capable of grasping the hook of the hanger from the top, while the hook automatically opens, overcoming the force of the spring opposing it, the two sections of the clip, whose ends are shaped so as to form an upside down "V" shaped housing and centering groove for the hanger hook.

In this clip version, once the mobile section (7b) of the clip (7) has been opened, this hook fits into a slot (7G) on the fixed section (7a) in which it remains fixed until the mobile section (7b) snaps closed; this mobile section (7b) has a horizontal step (7h) closing the above slot (7g) from the bottom

This clip has also been adapted to the requirements of this invention; in particular, there is a vertical wall (7c) under its fixed section (7a), on whose front face there are two ribs (7d) which delimit an ascending upside down funnel shaped track (7e), in which the rear section of the clothes hanger hook is housed, thereby limiting its oscillations on its vertical plane or its rotations with respect to the vertical axis of its rectilinear section fitted in the body of the hanger.

It should however be noted that in order to increase the performance of the device in question, an even more original clip model could be fitted on the same, with several construction features which make it suitable for operating together with overhead belt conveyors, in which the hooks of the hangers are in fact fitted in special numbered compartments, on a metal and flexible belt driven in an overhead rail.

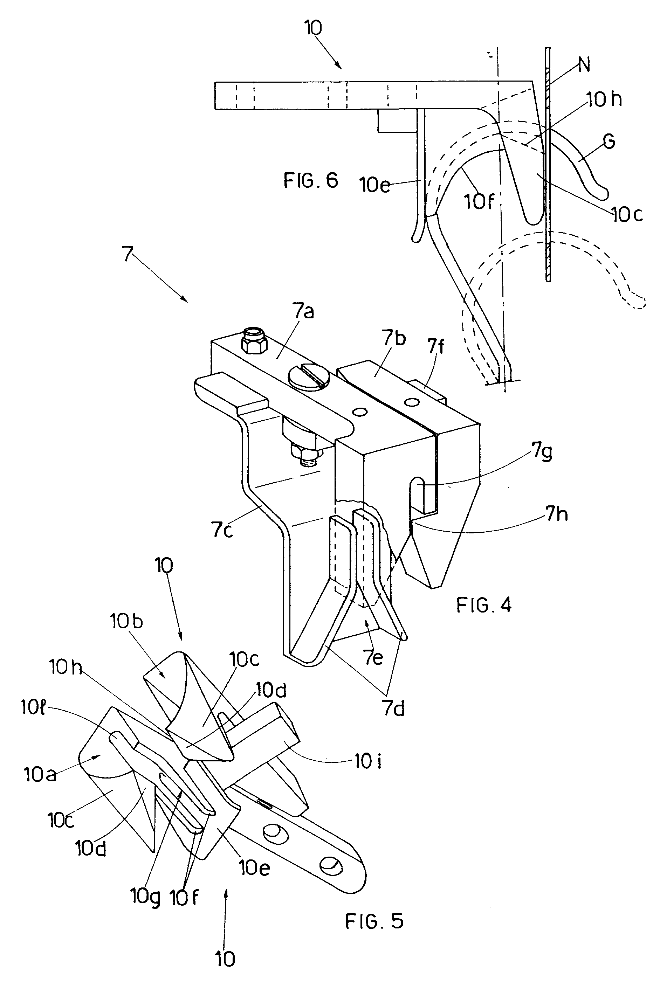

In fact, in this clip (10) which is constructed in an essentially traditional manner, its two sections, both the fixed (10a) and the mobile section (10b), are characterized in that the front wall (10c) (as illustrated in figure 6) is particularly curved, and positioned towards the respective bottom ends, the top of the front wall of each section of this clip being considerably moved back from and sloped with respect to the relevant underlying rounded area.

This configuration has been adopted in order to prevent the top of the front walls (10c) of the sections of the clip (10) from touching the conveyor (N) when the clip moves close to the conveyor (N) to lift or unload a hanger (G); this, after some time, could in fact compromise the safety and consequently the operating efficiency of the conveyor belt, or at least damage the adhesive numbers applied above each of the housing compartments these conveyor belts are fitted with.

On the other hand, the bottom curved front section of these sections is particularly useful for preventing one or both these sections from jamming in the conveyor belt compartments, should the conveyor oscillate and touch the clip positioned at the end of the run close to it; this could on the other hand occur in the case of the traditional models of a similar clip having sections whose front walls are perfectly flat.

In other words, this front curved section of the clip (10) allows the conveyor belt of the overhead conveyor system to slide against the front wall of the two sections (10a) and (10b) when it touches.

This clip (10) has an additional difference with respect to previous models in that the internal face (10d) of its sections (10a) and (10b) have pointed helicoidally shaped and divergent bottom ends; this particular structure allows these sections (10d) of the clip (10) in question to take the hook of the hanger to be grasped to a perfectly perpendicular position, thereby ensuring the safety of the hold.

An additional peculiarity of this clip (10) is that it has a transverse wall (10e) placed at the back of the fixed section (10a), and coupled to the same by means of two edges (10f) which delimit a track (10g) in which the hook of the hooked clip hanger is housed.

In this case as well, the important purpose of the transverse wall (10e) and the edges (10f) is to limit the oscillations of the hanger for all the time in which this hangs from the clip in question (10).

No less interesting in terms of operation, is the particular slope forwards of the horizontal step (10h) plane of the mobile clip (10b); this feature in fact allows the hook of a hanger which has just been hooked, to slide back and to take the back against the transverse wall (10e) so as to limit the oscillations of the entire hanger, from the start.

Finally, it should be noted that the openable section (10b) is screwed above a shelf (10i) pivoted on a fixed section (10a); this fiked section (10a) features a slot (101) for housing the hook (G), closed from the bottom by a horizontal step (10h) of the openable branch (10b).

The operating phases of the device in question are now described, assuming to start from when the clip is above the hook of the hanger fitted on the first conveyor, in other words, above the hanger which is to be lifted and transferred.

The operation of the piston (4) lowers the oscillating bar (2) with respect to the fixed bar (3), and consequently hooks the hanger by means of the clip.

Once the hanger has been hooked, the piston (4) returns the oscillating bar (2) to a horizontal position parallel to the fixed bar (3), so that the trolley (6) can start its transfer run, operated by the hydraulic or pneumatic cylinder having a horizontal axis (8).

As mentioned above, during the transfer run, the hanger is overturned by 180°, where the pin (6e) of the trolley (6) passes through the loop (9a) of the rail (9).

At the end of the transfer run, by positioning this device appropriately with respect to the overhead clothing conveyors, the hanger hook is already partially fitted in its support housing in the second conveyor system, so that it is sufficient merely to open the clip by means of an appropriately positioned stop, to unload the hanger hook in the preset position.

## Claims

1. An automatic device for lifting, rotating and unloading clothes hangers, capable of operating between two overhead clothing conveyor systems installed side by side, **characterized in that** it consists of two horizontal tubular bars (2, 3), arranged parallel next to each other and hinged at one end by means of a horizontal pin (1) in order to allow the one bar (2) to oscillate in a vertical plane with respect to the other bar (3) which is fixed, a piston (4) is attached to said fixed bar (3), for supporting and operating the oscillating bar (2); in that on said oscillating bar (2), on its side wall facing the fixed bar (3), a "C" shaped guide (5) is attached, in which a number of idle wheels (6a) of a trolley (6) can slide horizontally, said trolley (6) being provided with a clip (7, 10) at its lower end, said clip (7, 10) being capable of hooking onto the hook of a hanger; said trolley (6) is driven in its alternating runs along the guide (5) by means of a second hydraulic cylinder (8) having a horizontal axis, and being attached to the oscillating bar (2); in that on the upper side of said oscillating bar (2) a rail (9) having an upside down "U" shaped cross-section is attached by means of supporting clamps; in that in said rail (9) a first pin (6e) having a vertical axis engages and slides, said first pin (6e) projecting from one end of a crank (6b), the other end of said crank (6b) being attached to the top of a second pin (6c) having a vertical axis, said second pin (6c) being supported by said trolley (6), the lower end of said second pin (6c) projecting at the lower end of said trolley (6) in order to support a horizontal shelf (6d) to which the said clip (7, 10) is attached; and in that the said rail (9) along its length, has a loop (9a) in a horizontal plane shaped so as to force the crank (6b), by coupling with the first pin (6e), to rotate 180°, making the underlying pin (6c) of the horizontal shelf (6d) and the clip (7, 10), rotate integrally with the crank (6b).

2. An automatic device for lifting, rotating and unloading clothes hangers, according to claim 1, comprising a clip (7), of a type capable of hooking onto the hook of said hangers by moving down from the top and consisting of two sections, one of which is fixed (7a) and one of which is openable (7b), shaped so as to form an upside down housing and centering "V", said clip (7) having a vertical wall (7c) at its lower end, on the front face of which there are two ribs (7d) forming an upside down funnel shaped rail (7e) for guiding the hook of the hanger.

3. An automatic device for lifting, rotating and unloading a clothes hanger according to claim 1, comprising a clip (10), of the type capable of hooking onto the hook of said hangers by moving down from the top and consisting of two sections, one of which is fixed (10a) and the other mobile (10b), shaped so as to form an upside down housing and centering "V"; both the said sections (10a, 10b) having a front wall (10c) which is cambered towards the lower pointed end; the opposing faces (10d) of the two lower pointed ends are helicoidally shaped and divergent, and the clip (10) has a transverse wall (10e) immediately behind the fixed section (10a), said wall (10e) being coupled to said fixed section (10a) by means of two edges (10f) which delimit a track (10g) into which the hook of a hanger fits.

## Patentansprüche

1. Automatische Vorrichtung zur Abnahme, Rotierung und Entladung von Kleiderbügeln, die in der Lage sind zwischen zwei Seite an Seite installierten Hängebahn-Transportanlagen für Kleidungsstücke zu arbeiten, dadurch gekennzeichnet, daß sie aus zwei horizontalen rohrförmigen Stangen (2 und 3) bestehen, die parallel zueinander angeordnet und an einem Ende mittels einem horizontalen Zapfen (1) drehbar befestigt sind, damit die eine Stange (2) auf einer Ebene oszillieren kann, die gegenüber der anderen, festen Stange (3), vertikal ausgerichtet ist, ein Kolben (4) ist auf dieser festen Stange (2) angebracht, um die oszillierende Stange (2) zu stützen und zu betätigen; daß auf der oszillierenden Stange (2), an ihrer seitlichen gegen die feste Stange (3) gewandten Wand eine "C"-Führung (5) befestigt ist, innerhalb derer die Losräder eines Wagens (6) in horizontaler Richtung laufen können, wobei dieser Wagen (6) an seiner unteren Seite mit einer Zangenvorrichtung (7, 10) versehen ist, diese Zangenvorrichtung (7, 10) ist in der Lage den Haken eines Kleiderbügels zu blockieren; dieser Wagen (6) wird in abwechselnden Hüben durch einen zweiten auf der oszillierenden Stange (2) installierten Hydrozylinder mit horizontaler Achse (8) der Führung (5) entlang geleitet; daß an der oberen Seite dieser oszillierenden Stange (2) eine Schiene (9) mit einem umgekehrten "U"-förmigen Querschnitt durch Haltebügel befestigt ist; daß in diese Schiene (9) ein erster Zapfen (6e) mit vertikaler Achse eingreift und läuft, dieser Zapfen (6e) aus dem einen Ende einer Kurbel (6b) herausragt, das andere Ende an die Spitze eines zweiten Zapfens (6c) mit vertikaler Achse befestigt ist, dieser zweite Zapfen (6c) von dem Wagen (6) abgestützt wird, das untere Ende dieses zweiten Zapfens (6c) aus dem unteren Ende dieses Wagens 96) herausragt, um eine horizontale Konsole (6d) abzustützen, an der die vorgenannte Zangenvorrichtung (7, 10) befestigt ist; und daß diese Schiene (9) ihrer Länge entlang eine Schleife (9a) auf einer horizontalen profilierten Ebene aufweist, sodaß die Kurbel (6b) aufgrund der Verbindung mit dem ersten Zapfen (6e) um 180° rotieren muß und der darunterliegende erste Zapfen (6e) der horizontalen Konsole (6d) und die Zangenvorrichtung (7, 10) zusammen mit der Kurbel (6b) rotieren.

2. Automatische Vorrichtung zur Abnahme, Rotierung und Entladung von Kleiderbügeln, nach Anspruch 1, eine Zangenvorrichtung (7) umfassend, die so beschaffen ist, daß sie die Haken der Kleiderbügel durch Bewegung von oben nach unten blockieren kann, die aus zwei Teilen besteht, von denen eines (7a) fest und das andere (7b) aufspreizbar ist und so geformt, daß es ein umgekehrtes "V"-Gehäuse und - zentrierung bildet, diese Zangenvorrichtung (7) hat an ihrem unteren Ende eine senkrechte Wand (7c), auf deren Vorderseite zwei Rippen (7d) vorgesehen sind, die eine in der Form eines umgekehrten Trichters ansteigende Führungsbahn für den Haken des Bügels bilden.

3. Automatische Vorrichung zur Abnahme, Rotierung und Entladung von Kleiderbügeln, gemäß Anspruch 1, eine Zangenvorrichtung (10) umfassend, die so beschaffen ist, daß sie die Haken der Kleiderbügel durch Bewegung von oben nach unten blockieren kann, die aus zwei Teilen besteht, von denen eines (10a) fest und das andere (10b) beweglich ist, so geformt, daß sie ein umgekehrtes "V"-Gehäuse und - zentrierung bilden. Beide Teile (10a, 10b) haben eine nach dem unteren spitzen Ende gebogene Vorderwand (10c); die entgegengesetzten Seiten (10d) der beiden unteren spitzen Enden sind schraubenförmig und divergent und die Zangenvorrichtung (10) hat eine unmittelbar hinter dem festen Teil (10a) angeordnete Querwand (10e), diese Wand (10e) ist mit diesem festen Teil (10a) durch zwei Kanten (10f) verbunden, die eine zur Aufnahme des Kleiderbügelhakens bestimmte Bahn (10g) begrenzen.

## Revendications

1. Machine automatique pour le prélèvement, la rotation et le déchargement des cintres en mesure de travailler entre deux lignes aériennes de transport de vêtements adjacentes, caractérisée en ce que elle est composée de deux barres tubulaires horizontales (2 et 3) juxtaposées parallèlement entre elles et pivotées à une extrémité au moyen d'un pivot horizontal (1) de manière à ce que la barre (2) puisse osciller sur un plan vertical par rapport à l'autre barre (3) qui est fixe; un piston (4) étant installé sur ladite barre fixe (3) pour soutenir et activer ladite barre oscillante (2); également caractérisée en ce que sur la barre oscillante (2), en correspondance de sa paroi latérale tournée vers la barre fixe (3), est fixée une coulisse en forme de "C" (5) dans laquelle peuvent glisser en horizontale les roues folles d'un chariot (6), ledit chariot (6) étant équipé d'une pince (7, 10) en correspondance de son extrémité inférieure; ladite pince (7, 10) étant en mesure de serrer le crochet d'un cintre; ledit chariot (6) étant poussé en courses alternées le long de la coulisse (5) au moyen d'un deuxième cylindre hydraulique (8) à axe horizontal installé sur la barre oscillante (2); machine étant caractérisée en ce que sur le côté supérieur de ladite barre oscillante (2) soit installé un rail (9) de section transversale en forme de "U" renversé et fixé au moyen d'étriers de support; également caractérisée en ce que dans le ledit rail (9) soit inséré et glisse un premier pivot (6e) à axe horizontal, ledit pivot (6e) forjettant de l'extrémité d'une manivelle (6b) dont l'extrémité opposée est fixée au sommet d'un deuxième pivot (6c) à axe vertical, ce deuxième pivot (6c) étant supporté par ledit chariot (6), l'extrémité inférieure du susdit deuxième pivot (6c) forjettant de l'extrémité inférieure du ledit chariot (6) de manière à supporter une tablette horizontale (6d) sur laquelle est fixée la susdite pince (7, 10); et caractérisée en ce que le susdit rail (9) présente, le long de son parcours, une anse (9a) sur un plan horizontal et dont le profil est tel à contraindre la manivelle (6b), grâce au couplage avec le premier pivot (6e), à pivoter de 180°, de manière à ce que le sous-jacent premier pivot (6e) de la tablette horizontale (6d) et la pince (7, 10) tournent solidairement avec la manivelle (6b).

2. Machine automatique pour le prélèvement, la rotation et le déchargement des cintres, selon la revendication 1), caractérisée en ce qu'elle est équipée d'une pince (7) qui est en mesure de serrer les crochets des cintres qui descendent du haut et constituée de deux branches, dont une est fixe (7a) et l'autre mobile (7b), moulées de manière à former un "V" renversé d'invitation et de centrage; ladite pince (7) ayant, sur son extrémité inférieure, une paroi verticale (7c) sur la partie frontale de laquelle sont prévues deux rainures (7d) qui forment une piste ascendante en forme d'entonnoir renversé qui fonctionne en tant que coulisse pour le crochet du cintre.

3. Machine automatique pour le prélèvement, la rotation et le déchargement des cintres, selon la revendication 1), caractérisée en ce qu'elle est équipée d'une pince (10) qui est en mesure de serrer les crochets des cintres qui descendent du haut et constituée de deux branches, dont une est fixe (10a) et l'autre mobile (10b), moulées de manière à former un "V" renversé d'invitation et de centrage; les deux branches (10a, 10b) ayant une paroi frontale (10c) qui est courbée vers l'extrémité inférieure qui est pointue; les deux faces opposées (10d) des deux extrémités pointues inférieures sont moulées de manière hélicoïdale et elles sont divergentes; la pince (10) ayant une paroi transversale (10e) disposée immédiatement derrière la branche fixe (10a), ladite paroi (10e) étant couplée à la susdite branche fixe (10a) au moyen de deux rebords (10f) qui délimitent une piste (10g) destinée à contenir le crochet d'un cintre.
